# EUROPÄISCHE PATENTSCHRIFT

(11) **EP 1 446 312 B1**
(45) Veröffentlichungstag und Bekanntmachung des Hinweises auf die Patenterteilung: **18.04.2007**
(21) Anmeldenummer: 02716765.9
(22) Anmeldetag: 12.02.2002
(51) Int. Cl.: B60T 8/40, B60T 7/04

(54) **ELEKTROHYDRAULISCHE BREMSANLAGE FÜR KRAFTFAHRZEUGE**
ELECTROHYDRAULIC BRAKE SYSTEM FOR MOTOR VEHICLES
SYSTEME DE FREINAGE ELECTRO-HYDRAULIQUE POUR AUTOMOBILES

(30) Priorität: 12.02.2001 DE 10106790; 23.02.2001 DE 10108659; 15.05.2001 DE 10123599
(43) Veröffentlichungstag der Anmeldung: 18.08.2004
(73) Patentinhaber: Continental Teves AG & Co. oHG, 60488 Frankfurt am Main (DE)
(72) Erfinder: DROTT, Peter, 65936 Frankfurt/Main (DE); GIERS, Bernhard, 60320 Frankfurt (DE); GÖBEL, Thomas, 60435 Frankfurt/Main (DE); KRÄMER, Horst, 65462 Ginsheim-Gustavsburg (DE); KRANLICH, Holger, 61184 Karben (DE); KLEIN, Andreas, 61352 Bad Homburg (DE); EMMERICH, Andreas, 61440 Oberursel (DE); KARL, Uwe, 65185 Wiesbaden (DE); HOFFMANN, Jan, Rochester Hills, MI 48309 (US); WAHL, Holger, 65510 Wallrabenstein (DE)
(86) Internationale Anmeldenummer: PCT/EP2002/001453
(87) Internationale Veröffentlichungsnummer: WO 2002/064409

(56) Entgegenhaltungen:
- EP-A- 1 110 836
- WO-A-00/43246
- WO-A-97/23373
- WO-A-98/45151
- DE-A- 19 543 582
- DE-C- 3 941 409
- PATENT ABSTRACTS OF JAPAN vol. 016, no. 563 (M-1342), 4. Dezember 1992 (1992-12-04) -& JP 04 218458 A (TOYOTA MOTOR CORP), 10. August 1992 (1992-08-10)
- PATENT ABSTRACTS OF JAPAN vol. 1998, no. 06, 30. April 1998 (1998-04-30) -& JP 10 044952 A (AISIN SEIKI CO LTD;TOYOTA MOTOR CORP), 17. Februar 1998 (1998-02-17)

## Beschreibung

Die Erfindung betrifft eine elektrohydraulische Bremsanlage für Kraftfahrzeuge, die in einer Betriebsart "Brake-by-Wire" sowohl vom Fahrzeugführer als auch unabhängig vom Fahrzeugführer ansteuerbar ist, in der "Brake-by-Wire"-Betriebsart betrieben wird und in einer Rückfallbetriebsart betrieben werden kann, in der nur der Betrieb durch den Fahrzeugführer möglich ist, mit einem mittels eines Bremspedals betätigbaren, mindestens einen Druckraum aufweisenden Hauptbremszylinder, einem mit dem Hauptbremszylinder zusammenwirkenden Wegsimulator mit einem mittels einer Feder positionierten Simulatorkolben, der einerseits einen die Feder aufnehmenden Simulatorraum und andererseits eine unmittelbar mit einem der Druckräume des Hauptbremszylinders in Verbindung stehende Simulatorkammer begrenzt, einem drucklosen Druckmittelvorratsbehälter, einer hydraulischen Hilfsdruckquelle, einer elektronischen Steuer- und Regeleinheit, und mit dem Hauptbremszylinder verbindbaren Radbremsen, sowie mit Mitteln zur Bereitstellung eines DruclQnittelvolumenstroms, der in der Rückfallbetriebsart mindestens den für die jeweils erforderliche Verzögerung notwendigen Druckmittelvolumenbedarf sicherstellt, wobei die Mittel eine Rückförderung des vom Wegsimulator in der Simulatorkammer aufgenommenen Druckmittelvolumens in den Druckraum des Hauptbremszylinders gewährleisten.

Eine derartige Bremsanlage ist z. B. aus der internationalen Patentanmeldung WO 98/45151 bekannt. Bei der vorbekannten Bremsanlage erfolgt eine Rückförderung des vom Wegsimulator in der Simulatorkammer aufgenommenen Druckmittelvolumens in den Druckraum des Hauptbremszylinders mechanisch mittels einer Druckfeder, die in einem Störfall den Simulatorkolben entgegen seiner Betätigungsrichtung zurück stellt und das von der Simulatorkammer aufgenommene Druckmittelvolumen in den Druckraum des Hauptbremszylinders verdrängt.

Weniger vorteilhaft wird jedoch die Tatsache empfunden, dass bei einem Versagen der Funktion der erwähnten Feder, beispielsweise einem Bruch, kein Zurückstellen des Simulatorkolbens möglich ist. Das bekannte System ist deshalb nicht in der Lage, das vom Wegsimulator aufgenommene Druckmittelvolumen zur Verfügung zu stellen.

Es ist daher Aufgabe der vorliegenden Erfindung, eine Erhöhung der Betriebssicherheit der Bremsanlage der eingangs genannten Gattung zu erreichen bzw. eine Bremsanlage vorzuschlagen, bei der in allen Fahrsituationen ein ausreichendes Druckmittelvolumen zur Verfügung gestellt wird.

Diese Aufgabe wird erfindungsgemäß dadurch gelöst, daß die hydraulische Hilfsdruckquelle mit den Radbremsen verbunden ist und dass die Rückförderung mittels der von der hydraulischen Hilfsdruckquelle auf den Simulatorkolben aufgebrachten Energie erfolgt.

Eine vorteilhafte Weiterbildung des Erfindungsgegenstandes sieht vor, daß die Hilfsdruckquelle durch einen aufladbaren Hochdruckspeicher gebildet ist, und daß eine Ventilanordnung vorgesehen ist, die in der "Brake-by-Wire"-Betriebsart eine hydraulische Verbindung zwischen dem Wegsimulator und dem Druckmittelvorratsbehälter freigibt und eine hydraulische Verbindung zwischen dem Wegsimulator und dem Hochdruckspeicher absperrt, während sie in der Rückfallbetriebsart die hydraulische Verbindung zwischen dem Wegsimulator und dem Druckmittelvorratsbehälter absperrt und die hydraulische Verbindung zwischen dem Wegsimulator und dem Hochdruckspeicher freigibt.

Der Simulatorkolben wird dabei vorzugsweise in der Rückfallbetriebsart entgegen seiner der "Brake-by-Wire"-Betriebsart entsprechenden Bewegungsrichtung mit dem vom Hochdruckspeicher zur Verfügung gestellten Druck beaufschlagt.

Eine vorteilhafte Weiterbildung des Erfindungsgegenstandes sieht vor, daß die Hilfsdruckquelle durch einen aufladbaren Hochdruckspeicher gebildet ist, und dass eine Ventilanordnung vorgesehen ist, die in der "Brake-by-Wire"-Betriebsart eine hydraulische Verbindung zwischen einer Hydraulikkammer einer Kolben-Zylinder-Anordnung und dem Druckmittelvorratsbehälter freigibt und eine hydraulische Verbindung zwischen der Hydraulikkammer und dem Hochdruckspeicher absperrt, während sie in der Rückfallbetriebsart die hydraulische Verbindung zwischen der Hydraulikkammer und dem Druckmittelvorratsbehälter absperrt und die hydraulische Verbindung zwischen der Hydraulikkammer und dem Hochdruckspeicher freigibt, wobei die Hydraulikkammer von einem hydraulischen Kolben begrenzt wird, der mit dem vom Hochdruckspeicher zur Verfügung gestellten Druck beaufschlagt wird und der in der Rückfallbetriebsart den Simulatorkolben entgegen seiner der "Brake-by-Wire"-Betriebsart entsprechenden Bewegungsrichtung verstellt.

Bei einer weiteren Ausgestaltung der Erfindung wird die Hilfsdruckquelle durch einen aufladbaren Hochdruckspeicher gebildet, wobei der Simulatorkolben in der Rückfallbetriebsart entgegen seiner der "Brake-by-Wire"- Betriebsart entsprechenden Bewegungsrichtung durch ein mechanisches Betätigungselement verstellt wird, das mittels einer durch den vom Hochdruckspeicher zur Verfügung gestellten Druck spannbaren Rückstellfeder betätigt wird.

Ein Teil des Betätigungselementes ist zweckmäßig als ein hydraulischer Kolben ausgebildet.

Dabei ist es besonders vorteilhaft, wenn der hydraulische Kolben eine erste Druckkammer von einer zweiten Druckkammer trennt und wenn eine Ventilanordnung vorgesehen ist, die in der "Brake-by-Wire"-Betriebsart eine hydraulische Verbindung zwischen der ersten Druckkammer und dem Hochdruckspeicher freigibt und eine hydraulische Verbindung zwischen der Druckkammer und dem Druckmittelvorratsbehälter absperrt, während sie in der Rückfallbetriebsart die hydraulische Verbindung zwischen der ersten Druckkammer und dem Hochdruckspeicher absperrt und die hydraulische Verbindung zwischen der ersten Druckkammer und dem Druckmittelvorratsbehälter freigibt.

Weitere Einzelheiten, Merkmale und Vorteile der Erfindung gehen aus der nachfolgenden Beschreibung von insgesamt neun unter Bezugnahme auf die beiliegende schematische Zeichnung hervor, wobei für gleiche Komponenten die gleichen Bezugszeichen verwendet werden. In den Zeichnungen zeigen:
- Fig. 1a: den Aufbau der erfindungsgemäßen Bremsanlage gemäß einer ersten Ausführungsform im aktiven bzw. Bereitschaftszustand,
- Fig. 1b: die Bremsanlage gemäß Fig. 1a im inaktiven bzw. stromlosen Zustand,
- Fig. 2: den Aufbau einer zweiten Ausführungsform der erfindungsgemäßen Bremsanlage im inaktiven bzw. stromlosen Zustand, und

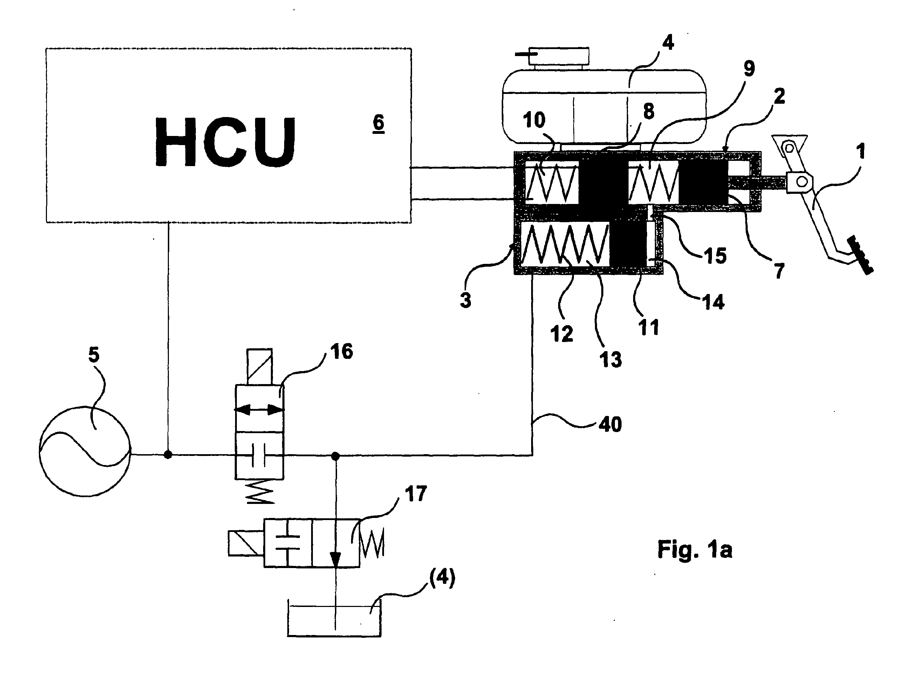

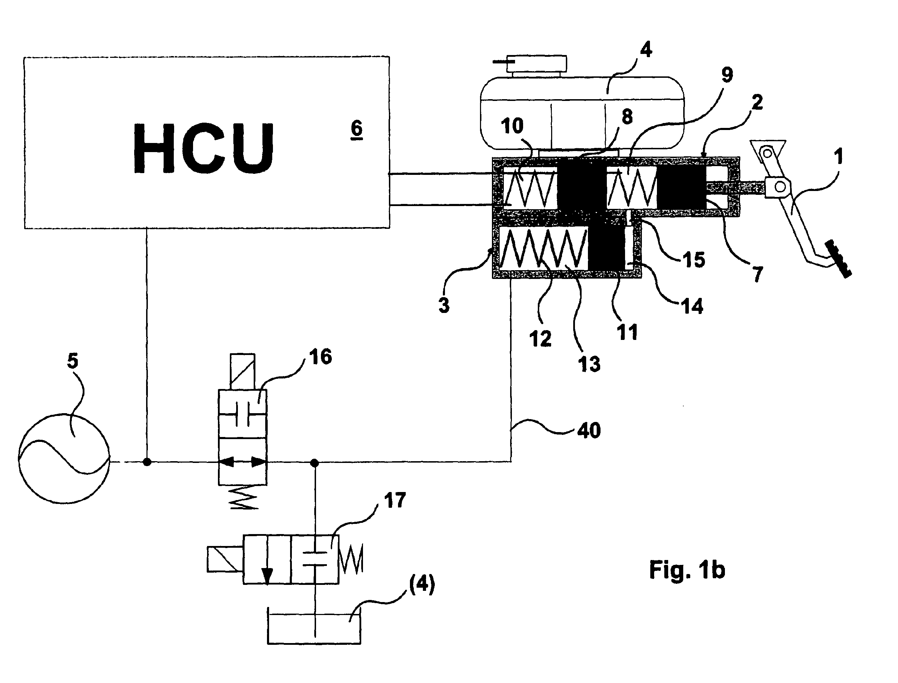

Die in der Zeichnung lediglich schematisch dargestellte Bremsanlage besteht im wesentlichen aus einem mittels eines Bremspedals 1 betätigbaren, zweikreisigen hydraulischen Druckerzeuger bzw. Hauptbremszylinder 2 in Tandemausführung, einem mit dem Tandemhauptzylinder 2 zusammenwirkenden Wegsimulator 3, einem dem Tandemhauptzylinder 2 zugeordneten Druckmittelvorratsbehälter 4, einer hydraulischen Hilfsdruckquelle 5, einer lediglich schematisch angedeuteten hydraulischen Steuereinheit HCU 6, die u. a. sämtliche, für Druckregelvorgänge erforderlichen Komponenten enthält und an die nicht dargestellte Fahrzeugbremsen angeschlossen sind, sowie einer nicht dargestellten elektronischen Steuer- und Regeleinheit. Der an sich bekannte Tandemhauptzylinder 2 weist durch zwei Kolben 7, 8 begrenzte, voneinander getrennte Druckräume 9, 10, auf, die sowohl mit dem Druckmittelvorratsbehälter 4 als auch über die HCU 6 mit den Fahrzeugbremsen verbindbar sind. Der vorhin erwähnte Wegsimulator 3, der dem Fahrer im Brake-by-Wire-Modus das gewohnte Bremspedalgefühl vermittelt, besteht im wesentlichen aus einem Simulatorkolben 11 sowie einer sich am Simulatorkolben 11 abstützenden Feder 12, die in einem vom Simulatorkolben 2.1 begrenzten Simulatorraum 13 angeordnet ist. Andererseits begrenzt der Simulatorkolben 11 eine Simulatorkammer 14, die mittels eines Druclanittelkanals 15 mit dem ersten Druckraum 9 des Tandemhauptzylinders 2 verbunden und somit mit dem darin eingesteuerten hydraulischen Druck beaufschlagbar ist. Weiterhin ist Fig. 1a und 1b zu entnehmen, daß zwischen der Hilfsdruckquelle 5, die vorzugsweise durch einen Hochdruckspeicher gebildet ist, und dem Simulatorraum 13 eine hydraulische Leitung 40 vorgesehen ist, die mittels eines elektromagnetisch betätigbaren, vorzugsweise stromlos offenen (SO-) 2/2-Wegeventils 16 absperrbar bzw. freigebbar ist. Der Simulatorraum 13 ist außerdem über ein elektromagnetisch betätigbares, vorzugsweise stromlos geschlossenes (SG-) 2/2-Wegeventil 17 an einen drucklosen Druckmittelvorratsbehälter angeschlossen, der wie mit dem Bezugszeichen (4) angedeutet ist, durch den vorhin erwähnten Druckmittelvorratsbehälter 4 gebildet werden kann.

Im nachfolgenden Text wird die Funktionsweise der in Fig. la,b gezeigten erfindungsgemäßen Bremsanlage näher erläutert.

Im unbetätigten Zustand des Bremspedals 1 befinden sich sämtliche Komponenten in der in Fig. 1a gezeigten Stellung. In der Brake-by-Wire-Betriebsart wird der am Bremspedal 1 mittels eines nicht gezeigten Wegsensors erfaßte Fahrerverzögerungswunsch in der vorhin erwähnten elektronischen Steuereinheit in einen in den Fahrzeugbremsen einzusteuernden Systemdruckwert umgerechnet, der mittels der HCU 6 eingestellt wird. Der Tandemhauptzylinder 2 ist dabei von den Fahrzeugbremsen getrennt. Durch die Bewegung des ersten Hauptzylinderkolbens 7 in der Betätigungsrichtung wird der Simulatorkolben 11 mit Druck beaufschlagt und somit in der Zeichnung nach links verschoben, so daß dem Fahrer bei Betätigung des Bremspedals 1 ein Pedalgefühl vermittelt wird, das durch die Kennlinie der Feder 12 vorgegeben ist. Das aus dem Simulatorraum 13 verdrängte Druckmittelvolumen wird über das offene Ventil 17 in den Druckmittelvorratsbehälter (4) verschoben.

Bei einem Stromausfall, der beispielsweise durch einen Batteriedefekt, einen Kurzschluß oder durch Ausschalten der Zündung verursacht wird, geht die erfindungsgemäße Bremsanlage automatisch in eine erste Rückfallbetriebsart über, in der Fahrerbremsungen möglich sind. Dabei werden die Ventile 16, 17 in die in Fig. 1b gezeigte Schaltstellung umgeschaltet, so daß die Verbindung zwischen dem Simulatorraum 13 und dem Druckmittelvorratsbehälter (4) unterbrochen wird. Dabei wird die der Feder 12 zugewandte Stirnfläche des Simulatorkolbens 11 mit dem vom Hochdruckspeicher 5 bereitgestellten Druck beaufschlagt, so daß der Simulatorkolben 11 in seine Ausgangsstellung zurück fährt und das von der Simulatorkammer 14 aufgenommene Druckmittelvolumen in den ersten Druckraum 9 des Tandemhauptzylinders 2 zurück gefördert wird.

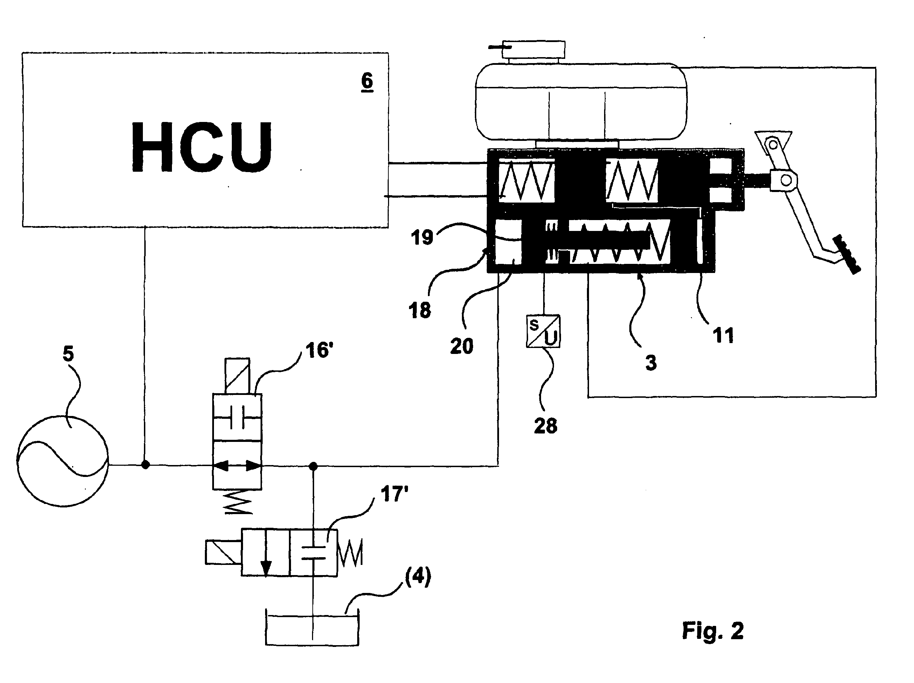

Bei dem in Fig. 2 dargestellten Ausführungsbeispiel ist dem Wegsimulator 3 wirkungsmäßig eine Kolben-Zylinder-Anordnung 18 vorgeschaltet, deren Kolben 19 in eine kraftübertragende Verbindung mit dem Simulatorkolben 11 bringbar ist. Der Kolben 19 begrenzt eine Hydraulikkammer 20, die über die im Zusammenhang mit Fig. 1 erwähnte Ventilanordnung 16, 17 mit dem Hochdruckspeicher 5 bzw. dem Druckmittelvorratsbehälter (4) verbindbar ist. Der Abbildung ist eindeutig zu entnehmen, daß die Hydraulikkammer 20 bei der der dargestellten Rückfallbetriebsart entsprechenden Schaltstellung der Ventile 16, 17 vom Druckmittelvorratsbehälter (4) getrennt mit dem Hochdruckspeicher 5 verbunden ist, so daß der Kolben 19 in der Zeichnung nach rechts verschoben wird und den Simulatorkolben 11 zurück stellt. Die Rückstellbewegung des Simulatorkolbens 11 in die Ausgangsstellung bewirkt ein Verdrängen des von der Simulatorkammer 14 aufgenommenen Druckmittelvolumens in den Hauptbremszylinder 2. Ein lediglich schematisch angedeuteter Wegsensor 28 ermöglicht eine Positionsüberwachung des Kolbens 19.

## Patentansprüche

1. Elektrohydraulische Bremsanlage für Kraftfahrzeuge, die in einer Betriebsart "Brake-by-Wire" sowohl vom Fahrzeugführer als auch unabhängig vom Fahrzeugführer ansteuerbar ist, in der "Brake-by-Wire"-Betriebsart betrieben wird und in einer Rückfallbetriebsart betrieben werden kann, in der nur der Betrieb durch den Fahrzeugführer möglich ist, mit einem mittels eines Bremspedals (1) betätigbaren, mindestens einen Druckraum (9, 10) aufweisenden Hauptbremszylinder (2), einem mit dem Hauptbremszylinder (2) zusammenwirkenden Wegsimulator (3) mit einem mittels einer Feder (12) positionierten Simulatorkolben (11), der einerseits einen die Feder (12) aufnehmenden Simulatorraum (13) und andererseits eine unmittelbar mit einem (9) der Druckräume (9, 10) des Hauptbremszylinders (2) in Verbindung stehende Simulatorkammer (14) begrenzt, einem drucklosen Druckmittelvorratsbehälter (4), einer hydraulischen Hilfsdruckquelle (5), einer elektronischen Steuer- und Regeleinheit, und mit dem Hauptbremszylinder (2) verbindbaren Radbremsen, sowie mit Mitteln zur Bereitstellung eines Druckmittelvolumenstroms, der in der Rückfallbetriebsart mindestens den für die jeweils erforderliche Verzögerung notwendigen Druckmittelvolumenbedarf sicherstellt, wobei die Mittel eine Rückförderung des vom Wegsimulator (3) in der Simulatorkammer (14) aufgenommenen Druckmittelvolumens in den Druckraum (9) des Hauptbremszylinders (2) gewährleisten, **dadurch gekennzeichnet, dass** die hydraulische Hilfsdruckquelle (5) mit den Radbremsen verbunden ist und dass die Rückförderung mittels der von der hydraulischen Hilfsdruckquelle (5) auf den Simulatorkolben (11) aufgebrachten Energie erfolgt.

2. Elektrohydraulische Bremsanlage nach Anspruch 1, **dadurch gekennzeichnet, dass** die Hilfsdruckquelle durch einen aufladbaren Hochdruckspeicher (5) gebildet ist, und dass eine Ventilanordnung (16,17) vorgesehen ist, die in der "Brake-by-Wire"-Betriebsart eine hydraulische Verbindung zwischen dem Simulatorraum (13) und dem Druckmittelvorratsbehälter (4) freigibt und eine hydraulische Verbindung zwischen dem Simulatorraum (13) und dem Hochdruckspeicher (5) absperrt, während sie in der Rückfallbetriebsart die hydraulische Verbindung zwischen dem Simulatorraum (13) und dem Druckmittelvorratsbehälter (4) absperrt und die hydraulische Verbindung zwischen dem Simulatorraum (13) und dem Hochdruckspeicher (5) freigibt.

3. Elektrohydraulische Bremsanlage nach Anspruch 2, **dadurch gekennzeichnet, dass** der Simulatorkolben (11) in der Rückfallbetriebsart entgegen seiner der "Brake-by-Wire"-Betriebsart entsprechenden Bewegungsrichtung mit dem vom Hochdruckspeicher (5) zur Verfügung gestellten Druck beaufschlagt wird.

4. Elektrohydraulische Bremsanlage nach Anspruch 1, **dadurch gekennzeichnet, dass** die Hilfsdruckquelle durch einen aufladbaren Hochdruckspeicher (5) gebildet ist, und dass eine Ventilanordnung (16',17') vorgesehen ist, die in der "Brake-by-Wire"-Betriebsart eine hydraulische Verbindung zwischen einer Hydraulikkammer (20) einer Kolben-Zylinder-Anordnung (18) und dem Druckmittelvorrats-behälter (4) freigibt und eine hydraulische Verbindung zwischen der Hydraulikkammer (20) und dem Hochdruckspeicher (5) absperrt, während sie in der Rückfallbetriebsart die hydraulische Verbindung zwischen der Hydraulikkammer (20) und dem Druckmittelvorratsbehälter (4) absperrt und die hydraulische Verbindung zwischen der Hydraulikkammer (20) und dem Hochdruckspeicher (5) freigibt, wobei die Hydraulikkammer (20) von einem hydraulischen Kolben (19) begrenzt wird, der mit dem vom Hochdruckspeicher (5) zur Verfügung gestellten Druck beaufschlagt wird und der in der Rückfallbetriebsart den Simulatorkolben (11) entgegen seiner der "Brake-by-Wire"-Betriebsart entsprechenden Bewegungsrichtung verstellt.

## Claims

1. Electrohydraulic brake system for motor vehicles, which is controllable in a 'brake-by-wire' mode of operation by the vehicle operator as well as irrespective of the vehicle operator, is operated in the 'brake-by-wire' mode of operation, and can be operated in a fallback mode of operation in which only operation by the vehicle operator is possible, including a master brake cylinder (2) operable by means of a brake pedal (1) and having at least one pressure chamber (9, 10), a travel simulator (3) cooperating with the master brake cylinder (2) and having a simulator piston (11) that is positioned by means of a spring (12) and limits a simulator chamber (13) accommodating the spring (12), on the one hand, and a simulator chamber (14) communicating directly with one (9) of the pressure chambers (9, 10) of the master brake cylinder (2), on the other hand, an unpressurized pressure fluid reservoir (4), a hydraulic auxiliary pressure source (5), an electronic controlling and regulating unit, and wheel brakes connectable to the master brake cylinder (2), and with means for furnishing a pressure fluid volume flow that ensures in the fallback mode of operation at least the pressure fluid volume needed for the respectively required deceleration, the means safeguarding a return delivery of the pressure fluid volume taken up by the travel simulator (3) in the simulator chamber (14) into the pressure chamber (9) of the master brake cylinder (2), c h a r a c t e r i z e d in that the hydraulic auxiliary-pressure source (5) connects to the wheel brakes, and in that the return delivery is effected by means of the energy which the hydraulic auxiliary pressure source (5) applies to the simulator piston (11).

2. Electrohydraulic brake system as claimed in claim 1, **characterized in that** the auxiliary pressure source is a chargeable high-pressure accumulator (5), and that a valve assembly (16, 17) is provided which, in the 'brake-by-wire' mode of operation, opens a hydraulic connection between the simulator chamber (13) and the pressure fluid reservoir (4) and closes a hydraulic connection between the simulator chamber (13) and the high-pressure accumulator (5), while it closes the hydraulic connection between the simulator chamber (13) and the pressure fluid reservoir (4) and opens the hydraulic connection between the simulator chamber (13) and the high-pressure accumulator (5) in the fallback mode of operation.

3. Electrohydraulic brake system as claimed in claim 2, **characterized in that,** in the fallback mode of operation, the simulator piston (11) is acted upon by the pressure provided by the high-pressure accumulator (5) in opposition to its direction of movement that corresponds to the 'brake-by-wire' mode of operation.

4. Electrohydraulic brake system as claimed in claim 1, **characterized in that** the auxiliary pressure source is a chargeable high-pressure accumulator (5), and that a valve assembly (16', 17') is provided which, in the 'brake-by-wire' mode of operation, opens a hydraulic connection between a hydraulic chamber (20) of a piston-and-cylinder assembly (18) and the pressure fluid reservoir (4) and closes a hydraulic connection between the hydraulic chamber (20) and the high-pressure accumulator (5), while it closes the hydraulic connection between the hydraulic chamber (20) and the pressure fluid reservoir (4) and opens the hydraulic connection between the hydraulic chamber (20) and the high-pressure accumulator (5) in the fallback mode of operation, the said hydraulic chamber (20) being limited by a hydraulic piston (19) to which the pressure provided by the high-pressure accumulator (5) is applied and which, in the fallback mode of operation, displaces the simulator piston (11) in opposition to its direction of movement that corresponds to the 'brake-by-wire' mode of operation.

## Revendications

1. Système de freinage électrohydraulique pour véhicule automobile qui peut être commandé en un mode de fonctionnement "brake-by-wire" aussi bien par le conducteur du véhicule qu'indépendamment de celui-ci, qui peut fonctionner en mode "brake-by-wire" et dans un mode de fonctionnement de retour dans lequel le fonctionnement est possible uniquement par le conducteur du véhicule, avec un cylindre de frein principal (2) pouvant être actionné au moyen d'une pédale de frein (1) et comportant au moins une chambre sous pression (9, 10), avec un simulateur de course (3) coopérant avec le cylindre de frein principal (2) avec un piston de simulateur (11) positionné au moyen d'un ressort (12), lequel piston délimite d'une part un compartiment de simulateur (13) recevant le ressort (12) et d'autre part une chambre de simulateur (14) en liaison avec l'une (9) des chambres sous pression (9, 10) du cylindre de frein principal (2), avec un réservoir de fluide sous pression (4) hors pression, avec une source de pression auxiliaire hydraulique (5), une unité électronique de commande et de régulation, et avec des freins de roue pouvant être reliés au cylindre de frein principal (2), ainsi qu'avec des moyens pour fournir un flux volumique de fluide sous pression qui, en mode de retour, assure au moins le volume de fluide sous pression nécessaire pour le ralentissement nécessaire dans chaque cas, les moyens garantissant un reflux du volume de fluide sous pression, reçu par le simulateur de course (3) dans la chambre de simulateur (14), dans la chambre sous pression (9) du cylindre de frein principal (2), **caractérisé en ce que** la source de pression auxiliaire hydraulique (5) est reliée aux freins des roues et **en ce que** le reflux s'effectue au moyen de l'énergie appliquée par la source de pression auxiliaire hydraulique (5) sur le piston de simulateur (11).

2. Système de freinage électrohydraulique selon la revendication 1, **caractérisé en ce que** la source de pression auxiliaire est formée par un accumulateur haute pression (5) rechargeable, et **en ce qu'**il est prévu un agencement de soupapes (16, 17) qui en mode de fonctionnement "brake-by-wire" libère une liaison hydraulique entre le compartiment de simulateur (13) et le réservoir de fluide sous pression (4) et ferme une liaison hydraulique entre le compartiment de simulateur (13) et l'accumulateur haute pression (5), tandis qu'en mode de fonctionnement de retour, il ferme la liaison hydraulique entre le compartiment de simulateur (13) et le réservoir de fluide sous pression (4) et libère la liaison hydraulique entre le compartiment de simulateur (13) et l'accumulateur haute pression (5).

3. Système de freinage électrohydraulique selon la revendication 2, **caractérisé en ce que** le piston de simulateur (11) en mode de fonctionnement de retour dans le sens contraire à son sens de déplacement en mode "brake-by-wire", est sollicité par la pression fournie par l'accumulateur haute pression (5).

4. Système de freinage électrohydraulique selon la revendication 1, **caractérisé en ce que** la source de pression auxiliaire est formée par un accumulateur haute pression (5) rechargeable, et **en ce qu'**il est prévu un agencement de soupape (16', 17') qui, en mode de fonctionnement "brake-by-wire", libère une liaison hydraulique entre une chambre hydraulique (20) d'un agencement piston-cylindre (18) et le réservoir de fluide sous pression (4), et ferme une liaison hydraulique entre la chambre hydraulique (20) et l'accumulateur haute pression (5), tandis qu'en mode de fonctionnement de retour, il ferme la liaison hydraulique entre la chambre hydraulique (20) et le réservoir de fluide sous pression (4) et libère la liaison hydraulique entre la chambre hydraulique (20) et l'accumulateur haute pression (5), la chambre hydraulique (20) étant limitée par un piston hydraulique (19) qui reçoit la pression fournie par l'accumulateur haute pression (5) et qui, en mode de fonctionnement de retour, déplace le piston de simulateur (11) dans le sens de déplacement contraire au sens correspondant au mode "brake-by-wire".
